# FASCICULE DE BREVET EUROPEEN

(11) **EP 2 098 449 B1**
(45) Date de publication et mention de la délivrance du brevet: **15.05.2013**
(21) Numéro de dépôt: 09290158.6
(22) Date de dépôt: 05.03.2009
(51) Int. Cl.: B64C 27/51

(54) **Dispositif d'amortissement et système de rotor d'aérodyne l'incorporant**
Dämpfungsvorrichtung und Rotorsystem eines Luftfahrzeugs, das es beinhaltet
Damping device and aerodyne rotor system including same

(30) Priorité: 06.03.2008 FR 0801220
(43) Date de publication de la demande: 09.09.2009
(73) Titulaire: Hutchinson, 75008 Paris (FR)
(72) Inventeur: Richer de Forges, Hervé, 27000 Evreux (FR); Ciolczyk, Jean-Pierre, 45200 Montargis (FR)
(74) Mandataire: Bolinches, Michel Jean-Marie

(56) Documents cités:
- EP-A- 0 511 055
- US-A- 3 217 810
- US-A- 4 832 319
- US-A- 5 219 430
- US-A- 5 312 093

## Description

La présente invention concerne un dispositif d'amortissement en particulier destiné à former un amortisseur de mode de traînée pour pale d'hélicoptère, et un système de rotor d'aérodyne à voilure tournante, tel qu'un rotor d'hélicoptère, incorporant ce dispositif. L'invention s'applique d'une manière générale aux amortisseurs utilisés non seulement dans le domaine aéronautique, mais également dans d'autres domaines industriels impliquant des oscillations angulaires autour d'une articulation adjacente à un rotor.

De manière connue, les rotors sustentateurs d'hélicoptères ont un moyeu de type articulé qui est pourvu pour chaque pale d'une articulation dite de traînée qui est située autour d'un axe perpendiculaire au plan de la pale et qui donne à celle-ci une liberté d'oscillation angulaire dans le plan de rotation du rotor. On cherche à assurer autour de cette articulation un rappel élastique de chaque pale vers sa position angulaire moyenne, de façon à pouvoir ajuster la fréquence propre de l'ensemble de chaque pale en traînée, étant précisé qu'il est nécessaire d'amortir ces oscillations angulaires de traînée de pales pour minimiser la transmission des efforts dynamiques de traînée de chaque pale vers la structure de l'hélicoptère.

Les dispositifs d'amortissement de traînée connus qui sont utilisés entre chaque pale et le rotor sont principalement de deux types.

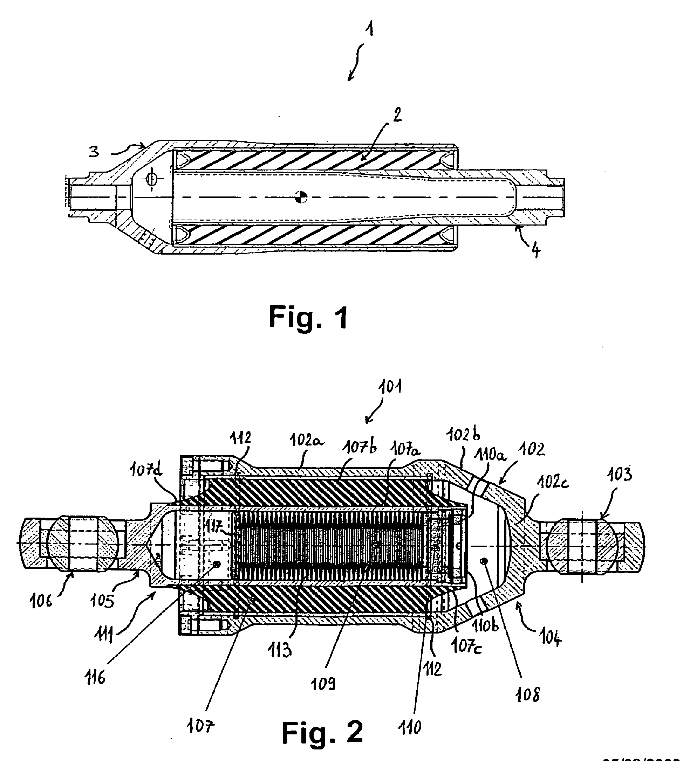

Comme illustré à la figure 1 ci-jointe, on distingue un premier type de tels dispositifs 1 utilisant uniquement un amortisseur élastomère 2 de section annulaire (usuellement à base d'un caoutchouc silicone) qui est cisaillé entre les parois respectives d'un bâti cylindrique externe 3 et d'un tube interne 4. Un inconvénient majeur de cette solution qui est très simple à mettre en oeuvre réside, d'une part, dans la très forte rigidification du dispositif aux faibles amplitudes d'excitation et, d'autre part, dans sa sensibilité excessive à la température extérieure. Un autre inconvénient de ce premier type de dispositifs d'amortissement est qu'ils sont surtout utilisables sur des appareils légers.

On distingue un second type de dispositifs d'amortissement de traînée principalement pour de gros appareils, utilisant des systèmes hydrauliques complexes usuellement à base de clapets, de pistons et de passages calibrés, et permettant de conserver un taux d'amortissement à peu près constant dans une large gamme d'amplitudes d'excitation. On peut par exemple citer le document EP-B-0 759 128 pour la description d'un tel dispositif, qui comporte deux amortisseurs élastomères annulaires qui sont montés autour d'un tube interne et qui sont séparés entre eux par une chambre de compensation annulaire à piston communiquant avec des chambres de travail également annulaires, étant précisé que cette chambre de compensation peut également être délimitée par un diaphragme ou un soufflet métallique. Si ces dispositifs sont relativement performants, ils présentent néanmoins l'inconvénient d'impliquer une complexité technique certaine, qui requiert en outre une maintenance importante.

Le document EP-A1-0 511 055 présente un dispositif d'amortissement pour relier un rotor d'hélicoptère à sa cellule ou nacelle, comportant un bâti externe et un élément interne à symétries de révolution reliés à deux rotules d'extrémité, deux paliers élastomères annulaires solidaires du bâti et de l'élément interne, et une chambre hydraulique de travail délimitée par le bâti et par l'un de ces paliers et communiquant via une colonne de fluide avec une chambre hydraulique de compensation. Cette chambre de compensation est délimitée par cet élément interne et par une membrane plate disposée transversalement au fond de ce dernier.

Un but de la présente invention est de proposer un dispositif d'amortissement qui remédie aux inconvénients précités, ce dispositif étant utilisable pour former un amortisseur de mode de traînée pour pale d'hélicoptère et comportant :
- un bâti radialement externe destiné à être couplé à un premier élément tournant, tel qu'une pale d'hélicoptère, et un élément radialement interne monté coaxialement au bâti et destiné à être couplé à un second élément tournant, tel qu'un rotor d'hélicoptère, le bâti et l'élément interne présentant chacun une symétrie de révolution,
- au moins un amortisseur élastomère de section transversale annulaire monté solidaire du bâti et de l'élément interne, et
- une chambre de travail qui est délimitée par le bâti et par l'amortisseur élastomère et qui communique avec une chambre de compensation délimitée par un organe souple hautement déformable monté coaxialement à l'élément interne, ces chambres étant remplies d'un fluide hydraulique.

A cet effet, un dispositif d'amortissement selon l'invention est tel que la chambre de travail est formée en une première extrémité du dispositif et communique avec la chambre de compensation par une structure poreuse surmontant une ouverture d'extrémité de l'organe souple, lequel renferme la chambre de compensation et est formé d'un soufflet métallique ou d'une membrane élastique monté à l'intérieur de l'élément interne sur la majeure partie de la longueur axiale de cet élément interne de telle sorte que, en réponse à des mouvements relatifs du bâti et de l'élément interne, la variation de volume de la chambre de travail force le fluide à s'écouler à travers cette structure poreuse pour que la chambre de compensation compense cette variation de volume.

On notera que ce dispositif selon l'invention permet de conserver un taux d'amortissement sensiblement constant indépendamment de l'amplitude de l'excitation, par exemple dans une plage de vibrations d'excitation allant de 0,5 mm à 20 mm environ entre un rotor et une pale d'hélicoptère, tout en présentant une structure relativement simple même pour des appareils relativement lourds, et que ce dispositif présente également l'avantage d'être peu sensible à la température, remédiant ainsi de manière satisfaisante aux inconvénients précités en relation avec les deux types de dispositifs d'amortissement évoqués ci-dessus.

Selon un mode particulier de réalisation de l'invention, ladite structure poreuse peut être formée d'un disque métallique à base d'un matériau fritté ou de fibres compressées.

Avantageusement, ledit organe souple est monté mobile au contact de la paroi dudit élément interne.

Encore plus avantageusement, ledit organe souple peut être formé d'un soufflet métallique à diaphragme qui est guidé à l'intérieur dudit élément interne par des moyens de guidage aptes à s'opposer à la force centrifuge dont le dispositif est le siège. Ces moyens de guidage peuvent par exemple comprendre :
- un revêtement antifriction pour ledit soufflet qui est formé sur la face radialement interne de la paroi dudit élément interne, et/ou
- un tube fixé sur ladite structure poreuse et s'étendant contre la face radialement interne de la paroi dudit soufflet le long de ce dernier.

Selon une autre caractéristique de l'invention, ledit dispositif d'amortissement comprend en outre avantageusement une chambre auxiliaire qui est formée en une seconde extrémité du dispositif en étant délimitée par ledit élément interne en regard dudit amortisseur élastomère, et dans laquelle est confiné un gaz sous pression pour éviter la cavitation dudit fluide dans lesdites chambres de travail et de compensation.

Selon une autre caractéristique de l'invention, l'amortisseur élastomère peut s'étendre sensiblement sur toute la longueur axiale dudit élément interne, lequel présente de préférence une paroi cylindrique, et sensiblement sur une portion également cylindrique en regard dudit bâti.

On notera en variante que les parois du bâti et de l'élément interne selon l'invention pourraient en variante présenter des formes ou tronçons tronconiques, à la place ou en plus de tronçons cylindriques.

Egalement à titre préférentiel, ledit bâti présente, en ladite première extrémité du dispositif, une portion sensiblement tronconique prolongeant ladite portion cylindrique et délimitant extérieurement ladite chambre de travail.

Un système de rotor d'aérodyne à voilure tournante selon l'invention, tel qu'un rotor d'hélicoptère, comporte au moins un dispositif d'amortissement tel que défini ci-dessus entre le rotor et ladite voilure.

Avantageusement, la Demanderesse a pu établir que ce dispositif d'amortissement selon l'invention est apte à conférer à ce système, entre le rotor et ladite voilure, un taux d'amortissement des vibrations qui est sensiblement constant dans une plage d'amplitudes de vibrations d'excitation allant de 0,5 mm à 20 mm, ce taux étant en outre sensiblement indépendant de la température extérieure.

D'autres avantages, caractéristiques et détails de l'invention ressortiront du complément de description qui va suivre en référence à des dessins annexés, donnés uniquement à titre d'exemples et dans lesquels :
la figure 1 est une vue en coupe axiale d'un dispositif d'amortissement de mode de traînée selon un exemple de l'art antérieur, et
la figure 2 est une vue en coupe axiale d'un dispositif d'amortissement de mode de traînée selon l'invention.

Comme illustré à la figure 2, un dispositif d'amortissement 101 selon l'invention, qui est en particulier apte à amortir le mode de traînée de pales d'hélicoptère, comporte essentiellement :
- un bâti 102 radialement externe qui est par exemple destiné à être couplé à une pale d'hélicoptère (non illustrée) par une première articulation 103 et qui comporte une portion globalement cylindrique 102a se prolongeant par une portion tronconique convergente 102b en une première extrémité 104 du dispositif 101 adjacente à cette première articulation 103,
- un élément tubulaire 105 radialement interne monté coaxialement au bâti 102 et par exemple destiné à être couplé à un rotor d'hélicoptère (non illustré) par une seconde articulation 106,
- un amortisseur élastomère 107 de section transversale annulaire monté solidaire du bâti 102 et de l'élément interne 105, et
- deux chambres hydrauliques de travail 108 et de compensation 109 qui sont respectivement formées en la première extrémité 104 du dispositif 101 et à l'intérieur de l'élément interne 105 et qui communiquent entre elles par une structure poreuse 110, ces chambres 108 et 109 étant toutes deux remplies d'un fluide hydraulique tel qu'une huile silicone, par exemple.

Plus précisément, l'amortisseur élastomère 107 s'étend quasiment sur toute la longueur axiale de l'élément interne 105 et de la portion cylindrique 102a en regard du bâti 102. Cet amortisseur 107 présente, vu en demi-section axiale, sensiblement une forme de trapèze isocèle dont la grande base cylindrique 107a est solidarisée avec les faces externes respectives des parois cylindriques de l'élément interne 105 et de la structure poreuse 110, dont la petite base cylindrique 107b est solidarisée avec la face interne de la portion cylindrique 102a du bâti 102, dont un premier côté latéral annulaire 107c est fixé en la première extrémité 104 du dispositif 101 et dont un second côté latéral annulaire 107d est fixé contre une seconde extrémité 111 du dispositif 101 adjacente à la seconde articulation 106.

L'amortisseur 107 est monté solidaire du bâti 102, de l'élément interne 105 et de la structure poreuse 110 via des moyens de fixation mécanique 112 traversant radialement les parois correspondantes de ces trois ensembles.

La chambre de travail 108 est délimitée, premièrement, par la portion tronconique 102b du bâti 102 et par une portion d'extrémité 102c du bâti 102 sensiblement radiale où converge la portion tronconique 102b et, deuxièmement, par le côté latéral annulaire 107c de l'amortisseur 107 et par la structure poreuse 110.

La chambre de compensation 109 est délimitée par un organe souple hautement déformable 113 monté coaxialement et à l'intérieur de l'élément interne 105, sur la majeure partie de la longueur axiale de ce dernier. Dans l'exemple préférentiel de la figure 2, l'organe souple 113 est constitué d'un soufflet métallique à diaphragme dont les crêtes des ondulations sont guidées contre la face interne de la paroi de l'élément interne 105 par des moyens de guidage (non visibles) aptes à s'opposer à la force centrifuge dont le dispositif 101 est le siège en utilisation du fait de la rotation du rotor adjacent. Ces moyens de guidage peuvent comprendre un revêtement antifriction radialement extérieur au soufflet 113 qui est formé par un chemisage de la face interne de la paroi de l'élément interne 105, avantageusement combiné au montage d'un tube radialement intérieur au soufflet 113 qui est fixé sur la structure poreuse 110 et qui s'étend le long du soufflet 113 contre la face interne des creux des ondulations de celui-ci.

La structure poreuse 110 surmonte une ouverture d'extrémité du soufflet 113, et elle est avantageusement formée d'une cassette circulaire ou disque métallique à base d'un matériau fritté ou de fibres compressées, qui est encastrée dans un support annulaire 110a dont une base externe circulaire 110b est montée de niveau avec le premier côté 107c de l'amortisseur élastomère 107.

Le dispositif d'amortissement 101 selon l'invention comprend en outre une chambre auxiliaire 116 qui est formée en la seconde extrémité 111 du dispositif 101 en étant délimitée par la partie de l'élément interne 105 en regard de l'amortisseur 107, et dans laquelle est confiné un gaz sous pression pour éviter la cavitation du fluide hydraulique remplissant les deux autres chambres de travail 108 et de compensation 109. Cette chambre auxiliaire 116 est séparée du soufflet 113, et donc de la chambre de compensation 109 qu'il renferme, par une plaque radiale circulaire 117 formant cloison étanche.

En fonctionnement, en réponse à des mouvements imposés aux deux extrémités 104 et 111 du dispositif d'amortissement 101, la variation de volume de la chambre de travail 108 force le fluide hydraulique à s'écouler à travers la structure poreuse 110 pour que la chambre de compensation 109 compense cette variation de volume, et amortisse ainsi de manière satisfaisante les vibrations en mode de traînée de chaque pale d'hélicoptère, dans cet exemple de réalisation, avec un taux d'amortissement à peu près indépendant de l'amplitude d'excitation et de la température extérieure.

## Revendications

1. Dispositif d'amortissement (101) utilisable pour former un amortisseur de mode de traînée pour pale d'hélicoptère, comportant :
- un bâti (102) radialement externe destiné à être couplé à un premier élément tournant, tel qu'une pale d'hélicoptère, et un élément radialement interne (105) monté coaxialement au bâti et destiné à être couplé à un second élément tournant, tel qu'un rotor d'hélicoptère, le bâti et l'élément interne présentant chacun une symétrie de révolution,
- au moins un amortisseur élastomère (107) de section transversale annulaire monté solidaire du bâti et de l'élément interne, et
- une chambre de travail (108) qui est délimitée par le bâti et par l'amortisseur élastomère et qui communique avec une chambre de compensation (109) délimitée par un organe souple hautement déformable (113) monté coaxialement à l'élément interne, ces chambres étant remplies d'un fluide hydraulique,
**caractérisé en ce que** la chambre de travail est formée en une première extrémité (104) du dispositif et communique avec la chambre de compensation par une structure poreuse (110) surmontant une ouverture d'extrémité de l'organe souple, lequel renferme la chambre de compensation et est formé d'un soufflet métallique ou d'une membrane élastique monté à l'intérieur de l'élément interne sur la majeure partie de la longueur axiale de cet élément interne de telle sorte que, en réponse à des mouvements relatifs du bâti et de l'élément interne, la variation de volume de la chambre de travail force le fluide à s'écouler à travers cette structure poreuse pour que la chambre de compensation compense cette variation de volume.

2. Dispositif d'amortissement (101) selon la revendication 1, **caractérisé en ce que** ladite structure poreuse (110) est formée d'un disque métallique à base d'un matériau fritté ou de fibres compressées.

3. Dispositif d'amortissement (101) selon la revendication 1 ou 2, **caractérisé en ce que** ledit organe souple (113) est monté mobile au contact de la paroi dudit élément interne (105).

4. Dispositif d'amortissement (101) selon la revendication 3, **caractérisé en ce que** ledit organe souple (113) est formé d'un soufflet métallique à diaphragme qui est guidé à l'intérieur dudit élément interne (105) par des moyens de guidage aptes à s'opposer à la force centrifuge dont le dispositif est le siège.

5. Dispositif d'amortissement (101) selon la revendication 4, **caractérisé en ce que** lesdits moyens de guidage comprennent :
- un revêtement antifriction pour ledit soufflet (113) qui est formé sur la face radialement interne de la paroi dudit élément interne (105), et/ou
- un tube fixé sur ladite structure poreuse (110) et s'étendant contre la face radialement interne de la paroi dudit soufflet le long de ce dernier.

6. Dispositif d'amortissement (101) selon une des revendications précédentes, **caractérisé en ce qu'**il comprend en outre une chambre auxiliaire (116) qui est formée en une seconde extrémité (111) du dispositif en étant délimitée par ledit élément interne (105) en regard dudit amortisseur élastomère (107), et dans laquelle est confiné un gaz sous pression pour éviter la cavitation dudit fluide dans lesdites chambres de travail (108) et de compensation (109).

7. Dispositif d'amortissement (101) selon une des revendications précédentes, **caractérisé en ce que** ledit amortisseur élastomère (107) s'étend sensiblement sur toute la longueur axiale dudit élément interne (105), lequel présente une paroi cylindrique, et sensiblement sur une portion également cylindrique (102a) en regard dudit bâti (102).

8. Dispositif d'amortissement (101) selon la revendication 7, **caractérisé en ce que** ledit bâti (102) présente, en ladite première extrémité (104) du dispositif, une portion sensiblement tronconique (102b) prolongeant ladite portion cylindrique (102a) et délimitant extérieurement ladite chambre de travail (108).

9. Système de rotor d'aérodyne à voilure tournante, tel qu'un rotor d'hélicoptère, **caractérisé en ce qu'**il comporte au moins un dispositif d'amortissement (101) selon une des revendications précédentes entre le rotor et ladite voilure.

10. Système de rotor d'aérodyne selon la revendication 9, **caractérisé en ce que** ledit dispositif (101) est apte à conférer à ce système, entre le rotor et ladite voilure, un taux d'amortissement sensiblement constant dans une plage d'amplitudes de vibrations d'excitation allant de 0,5 mm à 20 mm, ce taux étant en outre sensiblement indépendant de la température extérieure.

## Patentansprüche

1. Dämpfungsvorrichtung (101), die verwendbar ist, um einen Dämpfer mit Widerstandsmodus für ein Hubschauer-Rotorblatt zu bilden, wobei die Dämpfungsvorrichtung aufweist
ein radial äußeres Gehäuse (102), das dazu bestimmt ist, mit einem ersten Drehelement, wie z.B. einem Hubschrauber-Rotorblatt, gekoppelt zu werden, und ein radial inneres Element (105), das koaxial am Gehäuse montiert ist und dazu bestimmt ist, mit einem zweiten Drehelement, wie z.B. einem Hubschrauberrotor, gekoppelt zu werden, wobei das Gehäuse und das innere Element jeweils Rotationssymmetrie aufweisen,
zumindest einen Elastomerdämpfer (107) mit ringförmigem Querschnitt, der mit dem Gehäuse und dem inneren Element fest verbunden montiert ist, und
eine Arbeitskammer (108), die durch das Gehäuse und durch den Elastomerdämpfer abgegrenzt ist und die mit einer Ausgleichkammer (109) in Verbindung steht, die durch ein flexibles, in starkem Maße verformbares Element (113) abgegrenzt ist, das koaxial mit dem inneren Element montiert ist, wobei diese Kammern mit einem Hydraulikfluid gefüllt sind,
**dadurch gekennzeichnet, dass** die Arbeitskammer in einem ersten Endabschnitt (104) der Vorrichtung ausgebildet ist und mit der Ausgleichkammer über eine poröse Struktur (110) in Verbindung steht, die eine Endöffnung des flexiblen Elements überlagert, wobei dieses die Ausgleichkammer enthält und aus einem Metallbalg oder aus einer elastischen Membran gebildet ist, das im Inneren des inneren Elements auf dem Hauptteil der Axiallänge von diesem inneren Element in der Weise montiert ist, dass im Ansprechen auf die Relativbewegungen des Gehäuses und des inneren Elementes die Volumenänderung der Arbeitskammer das Fluid dazu zwingt, über diese poröse Struktur abzuströmen, damit die Ausgleichkammer diese Volumenänderung ausgleicht.

2. Dämpfungsvorrichtung (101) nach Anspruch 1, **dadurch gekennzeichnet, dass** die poröse Struktur (110) von einer Metallscheibe auf der Grundlage eines gesinterten Materials oder von komprimierten Fasern gebildet ist.

3. Dämpfungsvorrichtung (101) nach Anspruch 1 oder 2, **dadurch gekennzeichnet, dass** das flexible Element (113) in Kontakt mit der Wand des inneren Elements (105) beweglich montiert ist.

4. Dämpfungsvorrichtung (101) nach Anspruch 3, **dadurch gekennzeichnet, dass** das flexible Element (113) von einem metallischem Balg mit Trennwand gebildet wird, der im Inneren des inneren Elements (105) durch eine Führungseinrichtung geführt wird, die in der Lage ist, der Zentrifugalkraft entgegenzuwirken, von der die Vorrichtung der Sitz ist.

5. Dämpfungsvorrichtung (101) nach Anspruch 4, **dadurch gekennzeichnet, dass** die Führungseinrichtung aufweist:
einen reibsicheren Belag für den Balg (113), der auf der radial inneren Fläche der Wand des inneren Elements (105) gebildet ist, und/oder
ein Rohr, das an der porösen Struktur (110) befestigt ist und das sich gegen die radial innere Fläche der Wand des Balgs entlang von letzterem erstreckt.

6. Dämpfungsvorrichtung (101) nach einem der vorhergehenden Ansprüche, **dadurch gekennzeichnet, dass** diese ferner eine Hilfskammer (116) aufweist, die in einem zweiten Endabschnitt (111) der Vorrichtung gebildet ist, wobei diese durch das innere Element (105) gegenüber dem Elastomerdämpfer (107) abgegrenzt ist, und in der ein Gas unter Druck eingeschlossen ist, damit die Kavitation des Fluids in der Arbeitskammer (108) und der Ausgleichkammer (109) vermieden wird.

7. Dämpfungsvorrichtung (101) nach einem der vorhergehenden Ansprüche, **dadurch gekennzeichnet, dass** sich der Elastomerdämpfer (107) im Wesentlichen über die gesamte Axiallänge des inneren Elements (105) erstreckt, wobei dieses eine Zylinderwand aufweist, und sich im Wesentlichen über einen ebenfalls zylindrischen Abschnitt (102a) gegenüber dem Gehäuse (102) erstreckt.

8. Dämpfungsvorrichtung (101) nach Anspruch 7, **dadurch gekennzeichnet, dass** das Gehäuse (102) in dem ersten Endabschnitt (104) der Vorrichtung einen im Wesentlichen kegelstumpfförmigen Abschnitt (1 02b) aufweist, der den Zylinderabschnitt (1 02a) verlängert und der die Arbeitskammer (108) außen abgrenzt.

9. Rotorsystem von einem Luftfahrzeug mit einem Drehflügel, wie z.B. ein Hubschrauberrotor, **dadurch gekennzeichnet, dass** dieses zumindest eine Dämpfungsvorrichtung (101) nach einem der vorhergehenden Ansprüche zwischen dem Rotor und dem Drehflügel aufweist.

10. Rotorsystem von einem Luftfahrzeug nach Anspruch 9, **dadurch gekennzeichnet, dass** die Vorrichtung (101) in der Lage ist, diesem System zwischen dem Rotor und dem Drehflügel in einem Amplitudenbereich der Erregungsvibrationen von 0,5 mm bis 20 mm eine im Wesentlichen konstante Dämpfungsrate zu verleihen, wobei diese Rate ferner von der Außentemperatur im Wesentlichen unabhängig ist.

## Claims

1. Damping device (101), usable to form a drag-mode damper for a helicopter blade, comprising:
- a radially external frame (102) intended to be coupled to a first rotating element, such as a helicopter blade, and a radially internal element (105) mounted coaxially to the frame and intended to be coupled to a second rotating element, such as a helicopter rotor, the frame and the internal element each having a symmetry of revolution;
- at least one elastomer damper (107) of annular cross section mounted fixedly to the frame and to the internal element; and
- a working chamber (108) which is bounded by the frame and by the elastomer damper and which communicates with a compensation chamber (109) bounded by a highly deformable flexible member (113) mounted coaxially to the internal element, these chambers being filled with a hydraulic fluid,
**characterized in that** the working chamber is formed at a first end (104) of the device and communicates with the compensation chamber via a porous structure (110) surmounting an end opening of the flexible member, which member encloses the compensation chamber and is formed by a metal bellows or by an elastic membrane mounted inside the internal element over most of the axial length of this internal element such that, in response to relative movements of the frame and the internal element, the variation in volume of the working chamber forces the fluid to flow across this porous structure in order for the compensation chamber to compensate for this variation in volume.

2. Damping device (101) according to Claim 1, **characterized in that** said porous structure (110) is formed by a metal disk based on a sintered material or compressed fibers.

3. Damping device (101) according to Claim 1 or 2, **characterized in that** said flexible member (113) is movably mounted in contact with the wall of said internal element (105).

4. Damping device (101) according to Claim 3, **characterized in that** said flexible member (113) is formed by a diaphragm-type metal bellows which is guided inside said internal element (105) by guide means which are capable of opposing the centrifugal force undergone by the device.

5. Damping device (101) according to Claim 4, **characterized in that** said guide means comprise:
- an antifriction coating for said bellows (113) that is formed on the radially internal surface of the wall of said internal element (105), and/or
- a tube fastened to said porous structure (110) and extending against the radially internal surface of the wall of said bellows, along this bellows.

6. Damping device (101) according to any of the preceding claims, **characterized in that** it additionally comprises an auxiliary chamber (116) which is formed at a second end (111) of the device while being bounded by said internal element (105) opposite said elastomer damper (107), and in which chamber is confined a pressurized gas in order to prevent cavitation of said fluid in said working (108) and compensation (109) chambers.

7. Damping device (101) according to any of the preceding claims, **characterized in that** said elastomer damper (107) extends substantially over the whole axial length of said internal element (105), which has a cylindrical wall, and substantially over a likewise cylindrical portion (102a) of said frame (102) that is situated opposite.

8. Damping device (101) according to Claim 7, **characterized in that** said frame (102) has, at said first end (104) of the device, a substantially frustoconical portion (102b) extending said cylindrical portion (102a) and externally bounding said working chamber (108).

9. Rotary-wing aircraft rotor system, such as a helicopter rotor, **characterized in that** it comprises at least one damping device (101) according to any of the preceding claims between the rotor and said wing.

10. Aircraft rotor system according to Claim 9, **characterized in that** said device (101) is able to provide this system, between the rotor and said wing, with a damping level which is substantially constant over a range of excitation vibration amplitudes ranging from 0.5 mm to 20 mm, this level moreover being substantially independent of the outside temperature.
